# EUROPÄISCHE PATENTSCHRIFT

(11) **EP 1 918 622 B1**
(45) Veröffentlichungstag und Bekanntmachung des Hinweises auf die Patenterteilung: **18.05.2011**
(21) Anmeldenummer: 07018466.8
(22) Anmeldetag: 20.09.2007
(51) Int. Cl.: F16K 24/04, F16H 57/04

(54) **Vorrichtung zum Entlüften eines Fahrzeuggetriebes, insbesondere eines motorfesten Vorderachsgetriebes**
Device for venting a vehicle transmission, in particular an engine-mounted front axle transmission
Dispositif destiné à la ventilation d'un engrenage de véhicule, en particulier d'une traction avant

(30) Priorität: 02.11.2006 DE 102006051604
(43) Veröffentlichungstag der Anmeldung: 07.05.2008
(73) Patentinhaber: Dr. Ing. h.c. F. Porsche AG, 70435 Stuttgart (DE)
(72) Erfinder: Hauck, Christian, 71638 Ludwigsburg (DE); Wankum, Stefanie, 75446 Wiernsheim-Iptingen (DE)

(56) Entgegenhaltungen:
- DE-A1- 19 958 176
- DE-C1- 19 901 580
- DE-U1- 20 303 986
- US-A- 4 612 977
- US-A- 4 679 618
- US-A1- 2005 258 392

## Beschreibung

Die Erfindung betrifft eine Vorrichtung zum Entlüften eines Fahrzeuggetriebes, insbesondere eines motorfesten Vorderachsgetriebes.

Fahrzeuggetriebe besitzen standardmäßig eine Öffnung zur Getriebeentlüftung, die für die Funktion des Getriebes zwingend erforderlich ist. Spätestens zur Fahrzeugendmontage muss diese Funktion sichergestellt sein. Insbesondere bei der Verwendung von motorfesten Vorderachsgetrieben besteht die Anforderung einer frei wählbaren Einbaulage des Fahrzeuggetriebes im Montageprozess, z. B. unter einem Winkel von 180° gegenüber der Einbaulage des Getriebes im Fahrzeug. Da das Vorderachsgetriebe vom Lieferanten ölbefüllt angeliefert wird, entsteht das Problem, einen Ölaustritt bei der Motormontage zu verhindern. Ein einfaches Verschließen einer Entlüftungsöffnung im Getriebegehäuse mittels einer Kappe ist abzulehnen, weil ein Benetzen des Getriebegehäuses beim Entfernen der Kappe durch das an der Kappe anhaftende Öl nicht verhindert werden kann. Ein ölbenetztes Getriebe wird aber in der Fahrzeugendmontage als undicht zurückgewiesen. Abgesehen davon kann es im Kundendienstfall notwendig sein, den Motor einschließlich des Vorderachsgetriebes auf Montageträger aufzunehmen, die um 360° drehbar sind. Auch in diesem Fall muss sichergestellt sein, dass kein Öl aus dem Getriebegehäuse austritt. DE 19901580 sowie DE 19958176 zeigen Getriebe-Entlüftungsvorrichtungen. US 4679618, US 2005/0258392, DE 20303986 und US 4612977 zeigen weiterhin Vorrichtungen, die zur Getriebeentlüftung geeignet sind.

Aufgabe der vorliegenden Erfindung ist es, eine Vorrichtung zum Entlüften eines Fahrzeuggetriebes, insbesondere eines motorfesten Vorderachsgetriebes zu schaffen, die gewährleistet, dass eine Entlüftung des Getriebegehäuses bei der Montage und dem Service des Getriebes unterbleibt und im Betrieb des Getriebes die Entlüftung erfolgt.

Zur Lösung dieser Aufgabe schlägt die Erfindung eine Vorrichtung zum Entlüften eines Fahrzeuggetriebes, insbesondere eines motorfesten Vorderachsgetriebes vor, mit einer in eine Öffnung des Getriebegehäuses einsetzbaren Entlüfterhülse und einem in die Entlüfterhülse eingesetzten und relativ zu dieser beweglichen Entlüfterstopfen, wobei der Entlüfterstopfen in einer ersten Stellung über ein Dichtelement den Durchgang der Entlüfterhülse abdichtet und in einer zweiten Stellung den Durchgang der Entlüfterhülse freigibt sowie mit einem Arretierstift innerhalb von zwei Schlitzerweiterungen.

Ist das Getriebe in bestimmten Situationen in einer Lage anzuordnen, die zu einem Auslaufen des Öls aus dem Getriebegehäuse durch die Entlüftungsöffnung führen würde, braucht nur der Entlüfterstopfen in seine den Durchgang der Entlüfterhülse abdichtende Stellung überführt werden. In allen anderen Fällen wird er in seine den Durchgang der Entlüfterhülse freigebende Stellung überführt.

Die Entlüfterhülse ist in die Öffnung des Getriebegehäuses eingesetzt und mit dieser abgedichtet fest verbunden, so dass, unabhängig welche Lage das Getriebegehäuse einnimmt, zwischen der Entlüfterhülse und dem Getriebegehäuse kein Öl hindurchtreten kann.

Der Entlüfterstopfen ist vorzugsweise axial beweglich. In seiner vom Getriebegehäuse wegbewegten ersten Stellung dichtet er den Durchgang der Entlüfterhülse ab und in seiner auf das Getriebegehäuse zubewegten zweiten Stellung gibt er den Durchgang der Entlüfterhülse frei.

Baulich besonders einfach erfolgt die Abdichtung der Entlüfterhülse, wenn der Entlüftungsstopfen einen Ringabschnitt mit Ringnut aufweist und das Dichtelement, insbesondere ein 0-Ring, von der Ringnut aufgenommen wird. Die Entlüfterhülse weist vorzugsweise einen konstanten Innendurchmesser auf. In der ersten Stellung, in der das Dichtelement den Durchgang der Entlüfterhülse abdichtet, kontaktiert das Dichtelement die Entlüfterhülse im Bereich deren Innendurchmessers. In der zweiten Stellung des Entlüfterstopfens, somit in der Stellung, in der der Durchgang der Entlüfterhülse freigegeben wird, ist das Dichtelement vorzugsweise außerhalb der Entlüfterhülse angeordnet.

Gemäß einer bevorzugten Weiterbildung der Erfindung ist vorgesehen, dass der Entlüfterstopfen eine gegenüber der Querschnittsfläche des Ringabschnitts reduzierte Querschnittsfläche zur Ausbildung eines Entlüftungsspalts zwischen Entlüfterstopfen und Entlüfterhülse aufweist.

Damit nicht unbeabsichtigt die Vorrichtung in die Entlüftungsstellung überführt wird, sind Rastmittel zum Rastieren des Entlüfterstopfens in der Entlüfterhülse vorgesehen. Insbesondere sollte eine Rastierung in den beiden Stellungen des Entlüfterstopfens gewährleistet sein.

Um die Entlüfterhülse exakt bezüglich des Getriebegehäuses positionieren zu können, sollte die Entlüfterhülse einen Anschlag aufweisen. Des Weiteren ist es zweckmäßig, einen Deckel vorzusehen, der in der zweiten Stellung des Entlüfterstopfens, in der dieser den Durchgang der Entlüfterhülse freigibt, im Bereich des dem Getriebegehäuse abgewandten Endes der Entlüfterhülse diese abdeckt. Zum Gewährleisten der Entlüftung ist in diesem Fall eine radiale Öffnung in der Entlüfterhülse vorgesehen, die beispielsweise als Spalt ausgebildet ist. Dieser Spalt kann in Weiterbildung mit zwei Rastierausnehmungen zur Aufnahme eines radial mit dem Entlüfterstopfen verbundenen Stifts in den beiden Rastierstellungen des Entlüfterstopfens versehen sein.

Um den Entlüfterstopfen von der einen in die andere Stellung zu bewegen, insbesondere von der den Durchgang der Entlüfterhülse freigebenden Stellung in die den Durchgang abdichtenden Stellung, weist der Entlüfterstopfen vorteilhaft eine Anschlagfläche auf, die von einem Werkzeug hintergriffen werden kann.

Weitere Merkmale der Erfindung ergeben sich aus den Unteransprüchen, der Beschreibung der Zeichnung und der Zeichnung selbst, ohne hierauf beschränkt zu sein.

In der Zeichnung ist ein bevorzugtes Ausführungsbeispiel der Erfindung verdeutlicht. Es stellt dar:
- Fig. 1: eine Explosionsdarstellung der Teile der erfindungsgemäßen Vorrichtung zum Entlüften des Fahrzeuggetriebes, in einer räumlichen Ansicht,

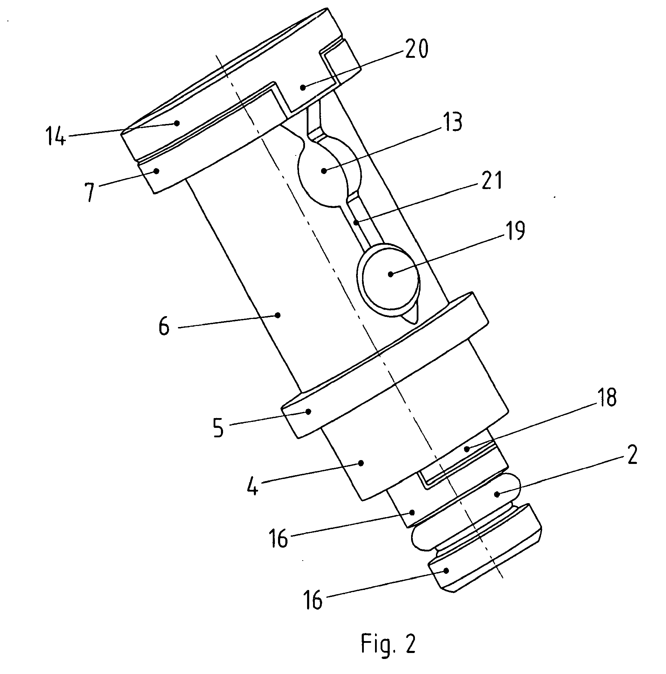

- Fig. 2: die räumliche Ansicht der Vorrichtung in der Position "Offen" des Entlüfters,
- Fig. 3: die Vorrichtung in der Position "Offen" des Entlüfters in einer Ansicht III gemäß Figur 4,
- Fig. 4: die Vorrichtung in der Position "Offen" des Entlüfters in einer Ansicht IV gemäß Figur 3,
- Fig. 5: die Vorrichtung in der Position "Geschlossen" des Entlüfters in einer Ansicht V gemäß Figur 6,
- Fig. 6: die Vorrichtung in der Position "Geschlossen" des Entlüfters in einer Ansicht VI gemäß Figur 5,
- Fig. 7: eine räumliche, teilweise geschnittene Ansicht der Vorrichtung in der Entlüfterposition "Offen",
- Fig. 8: eine räumliche, teilweise geschnittene Ansicht der Vorrichtung in der Entlüfterposition "Geschlossen".

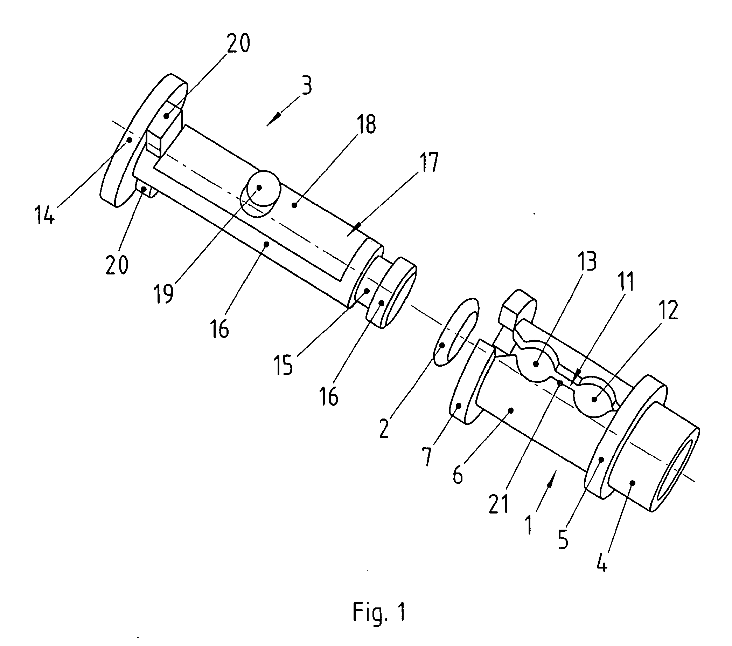

Wie in Fig. 1 veranschaulicht, weist die Vorrichtung zum Entlüften des Fahrzeuggetriebes eine Entlüfterhülse 1, einen 0-Ring 2 und einen Entlüfterstopfen 3 auf.

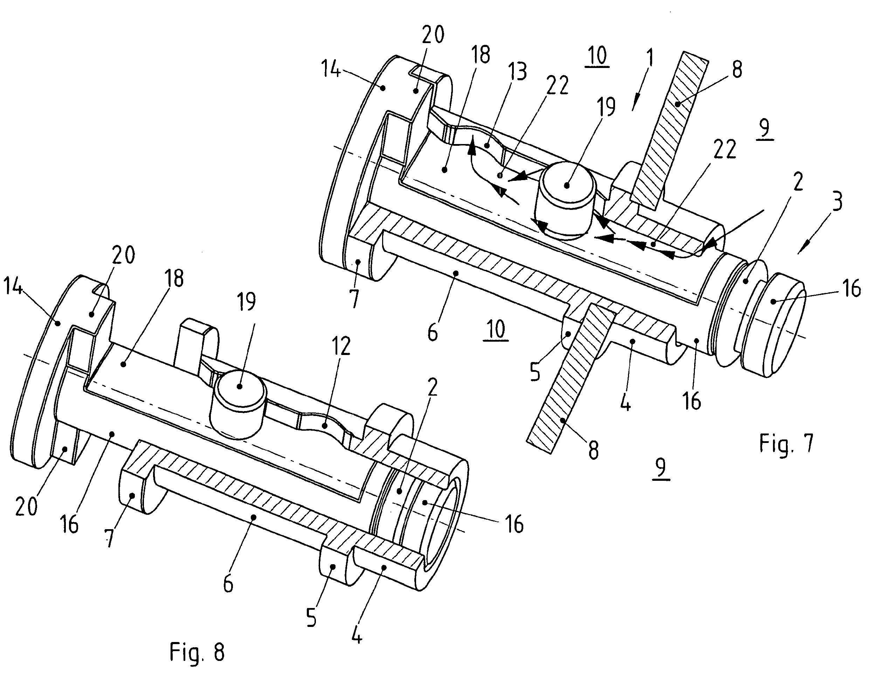

Die Entlüfterhülse 1 weist einen ersten Hülsenabschnitt 4, einen sich an diesen anschließenden äußeren Ringabschnitt 5, einen sich an diesen anschließenden Hülsenabschnitt 6 und einen das andere Ende der Entlüfterhülse 1 bildenden Ringabschnitt 7 auf. Die Entlüfterhülse 1 ist mit ihrem Hülsenabschnitt 4 in ein Durchgangsloch der Wandung 8 des Getriebegehäuses (siehe Fig. 7) eingesteckt und es kontaktiert der Ringabschnitt 5 diese Wandung 8. Gegebenenfalls unter Verwendung von Dichtmitteln ist die Entlüfterhülse 1 abgedichtet in der Wandung 8 des Getriebegehäuses gehalten.

In der Fig. 7 ist der Ölraum des Getriebes, somit der Innenraum des Getriebes mit der Bezugsziffer 9, die Umgebung des Getriebes mit der Bezugsziffer 10 bezeichnet.

Der sich an den Ringabschnitt 5 anschließende Hülsenabschnitt 6 und auch der Ringabschnitt 7 sind geschlitzt ausgebildet, wobei zwei Schlitze 11 vorgesehen sind, die diametral angeordnet sind. In der Fig. 1 ist nur der auf der einen Seite der Entlüfterhülse 1 befindliche Schlitz zu sehen, der andere Schlitz befindet sich auf der Unterseite der Entlüfterhülse. Der jeweilige Schlitz 11 ist benachbart dem Ringabschnitt 5 mit einer Schlitzerweiterung 12 versehen, die einen kreisförmigen Querschnitt aufweist. Eine entsprechende Schlitzerweiterung 13 ist zwischen dieser Schlitzerweiterung 12 und dem Ringabschnitt 7 im jeweiligen Schlitz 11 vorgesehen.

Der Entlüfterstopfen 3 weist im Bereich seines einen Endes einen Abschtussdeckel 14 mit kreisförmigem Querschnitt auf, dessen Durchmesser dem Außendurchmesser des Ringabschnitts 7 entspricht. Das dem Abschlussdeckel 14 abgewandte Ende des Entlüfterstopfens 3 ist mit einer umlaufenden Nut 15 zur Aufnahme des 0-Rings 2 versehen. Zwischen der Nut 15 und dem Abschlussdeckel 14 weist der Entlüfterstopfen 3 einen kreisförmigen Querschnitt auf, wobei der Durchmesser so gewählt ist, dass der Entlüfterstopfen 3 in diesem Bereich mit geringem Spiel in die axial verlaufende Öffnung der Entlüfterhülse 1 eingesteckt werden kann. Die Abdichtung zwischen Entlüfterstopfen 3 und der Entlüfterhülse 1 erfolgt mittels des 0-Rings 2. Der zylindrische Abschnitt 16 des Entlüfterstopfens 3 ist auf einander abgewandten Seiten mit Aussparungen 17 versehen, so dass der Entlüfterstopfen 3 in diesem Bereich einen geringeren Durchmesser hat, mit parallel zueinander verlaufenden Begrenzungsflächen der beiden Aussparungen 17. Senkrecht zur jeweiligen Begrenzungsfläche 18 ist ein Arretierstift 19 positioniert, wobei die den beiden Begrenzungsflächen 18 zugeordneten Arretierungsstifte 19 konzentrisch zur selben Achse angeordnet sind. Der Durchmesser der Arretierungsstifte 19 ist geringfügig geringer als der Durchmesser der Schlitzerweiterung 12 bzw. 13.

Der Abschlussdeckel 14 ist auf der der Nut 15 des Entlüfterstopfens 3 zugewandten Seite mit diametralen, somit den Aussparungen 17 zugeordneten Vorsprüngen 20 versehen, die bei vollständigem, in die Entlüfterhülse 1 eingestecktem Entlüfterstopfen 3 in die beiden Schlitze 11 der Entlüfterhülse 1 im Bereich des Ringabschnitts 7 eingesteckt sind.

Der Anlieferungszustand des Getriebeentlüfters ist "GESCHLOSSEN". Durch Drücken wird der Entlüfter aktiviert und in Position "OFFEN" gebracht.

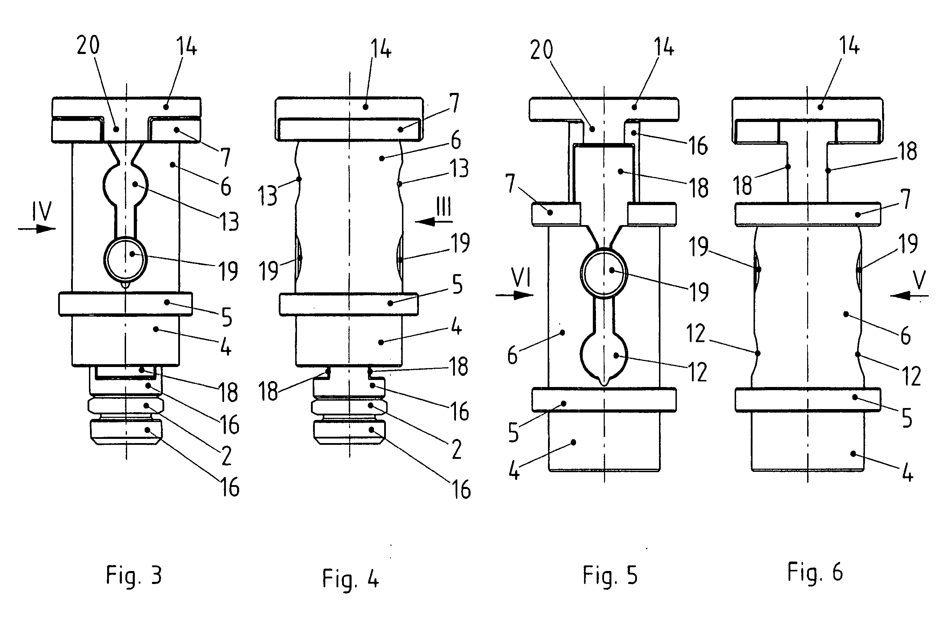

Die Fig. 3 und 4 veranschaulichen die insoweit beschriebene Vorrichtung zum Entlüften des Fahrzeuggetriebes in der Entlüfterposition "OFFEN". Die Aktivierung der Entlüfterposition "OFFEN" erfolgt durch vollständiges Eindrücken des Entlüfterstopfens 3 in die Entlüfterhülse 1. Beim Bewegen des Entlüfterstopfens 3 in diese Entlüfterposition werden die Arretierungsstifte 19 verschoben und dehnen die Entlüfterhülse 1 auf Grund des relativ schmalen Schlitzabschnitts 21 zwischen den Schlitzerweiterungen 12 und 13 des Schlitzes 11. In der Endstellung der genannten Entlüfterposition rastieren die beiden Arretierungsstifte 19 mit den beiden Schlitzerweiterungen 12.

In der in den Fig. 5 und 6 gezeigten Entlüfterposition "GESCHLOSSEN" ist der Entlüfterstopfen 3 soweit aus der Entlüfterhülse 1 herausgezogen, dass die beiden Arretierungsstifte 19 mit den anderen Schlitzerweiterungen 13 rastieren. Um ausgehend von der Entlüfterposition "OFFEN" die Entlüfterposition "GESCHLOSSEN" zu erreichen, wird ein Werkzeug, z. B. ein Schraubendreher, von der Schlitzseite der Entlüfterhülse 1 gegen einen der Vorsprünge 20 des Abschlussdeckels 14 bewegt.

Die Fig. 7 und 8 veranschaulichen die Verhältnisse im Inneren der Entlüfterhülse 1 in den Positionen "OFFEN" und "GESCHLOSSEN" der Vorrichtung.

In der in Fig. 7 gezeigten Entlüfterposition "OFFEN" ist der 0-Ring 2 über seinen Dichtsitz in der Entlüfterhülse 1 hinausgeschoben. Ein Spalt 22 zwischen Entlüfterhülse 1 und Entlüfterstopfen 3 ermöglicht nun den Luftaustausch zwischen dem Ölraum und der Umgebung 10. Veranschaulicht ist dies mittels der Vielzahl von Pfeilen, die den Luftstrom verdeutlichen. Die Luft gelangt vom Inneren des Getriebes durch den Spalt 22 zwischen dem Hülsenabschnitt 4 der Entlüfterhülse 1 und die Aussparungen 17 zu den dann offenen Schlitzerweiterungen 13.

In der Entlüfterposition "GESCHLOSSEN", wie sie in Fig. 8 gezeigt ist, dichtet der 0-Ring 2 auf dem Entlüfterstopfen 3 den Ölraum 9 des Getriebes zur Umgebung 10 des Getriebes ab. Der von dem Entlüfterstopfen 3 aufgenommene 0-Ring 2 kontaktiert dabei den Hülsenabschnitt 4 der Entlüfterhülse 1.

Der Abschlussdeckel 14 verhindert in der Position "OFFEN" des Entlüfters Schmutz- und direkten Spritzwassereintrag.

Es sind besondere Situationen denkbar, bei denen bei geöffneter Getriebeentlüftung die Gefahr besteht, dass Flüssigkeit, insbesondere Wasser, durch die Öffnung in das Getriebe eindringt. Um dies zu verhindern, ist es denkbar, einen Entlüfterschlauch mit der Vorrichtung zum Entlüften des Fahrzeuggetriebes zu verbinden und das dem Getriebe abgewandte Ende des Entlüfterschlauches dort zu positionieren, wo auf keinen Fall Flüssigkeit von außen in den Entlüfterschlauch gelangen kann. Als besonders zweckmäßig wird es angesehen, den Entlüfterschlauch am Ringabschnitt 5 anzubringen, diesen beispielsweise auf einen konischen Abschnitt des Ringabschnitts 5 aufzuschieben und dort mittels eines geeigneten Rastmittels zu fixieren oder über ein geeignetes Mittel zu klemmen. Der Entlüfterschlauch erstreckt sich über das dem Getriebe abgewandte Ende der Vorrichtung hinaus auf ein solches Niveau, dass keine Flüssigkeit in den Entlüfterschlauch eintreten kann.

### Bezugszeichenliste

- 1: Entlüfterhülse
- 2: 0-Ring
- 3: Entlüfterstopfen
- 4: Hülsenabschnitt
- 5: Ringabschnitt
- 6: Hülsenabschnitt
- 7: Ringabschnitt
- 8: Wandung
- 9: Ölraum
- 10: Umgebung
- 11: Schlitz
- 12: Schlitzerweiterung
- 13: Schlitzerweiterung
- 14: Abschlussdeckel
- 15: Nut
- 16: Zylindrischer Abschnitt
- 17: Aussparung
- 18: Begrenzungsfläche
- 19: Arretierungsstift
- 20: Vorsprung
- 21: Schlitzabschnitt
- 22: Spalt

## Patentansprüche

1. Vorrichtung zum Entlüften eines Fahrzeuggetriebes, insbesondere eines motorfesten Vorderachsgetriebes, mit einer in eine Öffnung des Getriebes einsetzbaren Entlüfterhülse (1) und einem in die Entlüfterhülse (1) eingesetzten und relativ zu dieser beweglichen Entlüfterstopfen (3), wobei der Entlüfterstopfen (3) in einer ersten Stellung über ein Dichtelement (2) den Durchgang der Entlüfterhülse (1) abdichtet und in einer zweiten Stellung den Durchgang der Entlüfterhülse (1) freigibt, wobei Rastmittel (12, 13, 19) zum Rastieren des Entlüfterstopfens (3) in der Entlüfterhülse (1) vorgesehen sind,
**dadurch gekennzeichnet, dass**
die Rastmittel (12, 13, 19) zwei in der Entlüfterhülse (1) ausgebildeten Schlitze (11) umfassen, die derart ausgebildet sind, dass ein am Entlüfterstopfen (3) angeordneter Arretierstift (19) innerhalb von zwei Schlitzerweiterungen (12, 13) aufnehmbar ist.

2. Vorrichtung nach Anspruch 1, wobei die Entlüfterhülse (1) einen vorderen, in das Getriebegehäuse (8) abgedichtet einsetzbaren Hülsenabschnitt (4) und einen hinteren, außerhalb des Getriebegehäuses angeordneten Hülsenabschnitt (5, 6, 7) aufweist.

3. Vorrichtung nach Anspruch 1 oder 2, wobei der Entlüfterstopfen (3) axial beweglich ist.

4. Vorrichtung nach Anspruch 3, wobei der Entlüfterstopfen (3) einen Ringabschnitt (16) mit Ringnut (15) aufweist und das Dichtelement, insbesondere ein O-Ring (2), von der Ringnut (15) aufgenommen wird.

5. Vorrichtung nach einem der Ansprüche 1 bis 4, wobei die Entlüfterhülse (1) einen konstanten Innendurchmesser aufweist.

6. Vorrichtung nach einem der Ansprüche 1 bis 5, wobei das Dichtelement (2) in der zweiten Stellung des Entlüfterstopfens (3) außerhalb der Entlüfterhülse (1) angeordnet ist.

7. Vorrichtung nach einem der Ansprüche 4 bis 6, wobei der Entlüfterstopfen (3) eine gegenüber der Querschnittsfläche des Ringabschnitts (16) reduzierte Querschnittsfläche zur Ausbildung eines Entlüftungsspalts (22) zwischen Entlüfterstopfen (3) und Entlüfterhülse (1) aufweist.

8. Vorrichtung nach einem der Ansprüche 1 bis 7, wobei die Entlüfterhülse (1) einen Anschlag (5) zum Positionieren der Entlüfterhülse (1) am Getriebegehäuse (8) aufweist.

9. Vorrichtung nach einem der Ansprüche 1 bis 8, wobei der Entlüfterstopfen (3) im Bereich seines dem Getriebegehäuse (8) abgewandten Endes einen Deckel (14) zum Abdecken des getriebegehäusefernen Endes der Entlüfterhülse (1) in der zweiten Stellung des Entlüfterstopfens (3) aufweist, wobei die Entlüftung über eine radiale Öffnung (13) der Entlüfterhülse (1) erfolgt.

10. Vorrichtung nach einem der Ansprüche 1 bis 9, wobei der Entlüfterstopfen (3) eine Anschlagfläche (20) zum Überführen des Entlüfterstopfens (3) von der zweiten in die erste Stellung mittels eines Werkzeuges aufweist.

11. Vorrichtung nach einem der Ansprüche 1 bis 10, wobei die Vorrichtung zum Entlüften des Fahrzeuggetriebes einen Ringabschnitt (5) aufweist, mit dem ein Entlüfterschlauch verbindbar ist.

## Claims

1. Apparatus for ventilating a vehicle transmission, in particular an engine-mounted front-axle transmission, having a ventilator sleeve (1) which can be inserted into an opening of the transmission and having a ventilator plug (3) which is inserted into the ventilator sleeve (1) and can be moved relative to the latter, the ventilator plug (3) sealing the channel of the ventilator sleeve (1) via a sealing element (2) in a first position and opening the channel of the ventilator sleeve (1) in a second position, latching means (12, 13, 19) being provided for latching the ventilator plug (3) in the ventilator sleeve (1), **characterized in that** the latching means (12, 13, 19) comprise two slots (11) which are formed in the ventilator sleeve (1) and are configured in such a way that a locking pin (19) which is arranged on the ventilator plug (3) can be received within two slot widened portions (12, 13).

2. Apparatus according to Claim 1, the ventilator sleeve (1) having a front sleeve section (4) which can be inserted into the transmission housing (8) in a sealed manner and a rear sleeve section (5, 6, 7) which is arranged outside the transmission housing.

3. Apparatus according to Claim 1 or 2, the ventilator plug (3) being axially movable.

4. Apparatus according to Claim 3, the ventilator plug (3) having an annular section (16) with an annular groove (15), and the sealing element, in particular an O-ring (2), being received by the annular groove (15).

5. Apparatus according to one of Claims 1 to 4, the ventilator sleeve (1) having a constant internal diameter.

6. Apparatus according to one of Claims 1 to 5, the sealing element (2) being arranged outside the ventilator sleeve (1) in the second position of the ventilator plug (3).

7. Apparatus according to one of Claims 4 to 6, the ventilator plug (3) having a reduced cross-sectional area in comparison with the cross-sectional area of the annular section (16), in order to form a ventilating gap (22) between the ventilator plug (3) and the ventilator sleeve (1).

8. Apparatus according to one of Claims 1 to 7, the ventilator sleeve (1) having a stop (5) for positioning the ventilator sleeve (1) on the transmission housing (8).

9. Apparatus according to one of Claims 1 to 8, the ventilator plug (3) having a cover (14) in the region of its end which faces away from the transmission housing (8) for covering that end of the ventilator sleeve (1) which is remote from the transmission housing in the second position of the ventilator plug (3), the ventilation taking place via a radial opening (13) of the ventilator sleeve (1).

10. Apparatus according to one of Claims 1 to 9, the ventilator plug (3) having a stop face (20) for transferring the ventilator plug (3) from the second into the first position by means of a tool.

11. Apparatus according to one of Claims 1 to 10, the apparatus for ventilating the vehicle transmission having an annular section (5), to which a ventilator hose can be connected.

## Revendications

1. Dispositif destiné à la ventilation d'un engrenage de véhicule, en particulier d'un engrenage d'un essieu avant solidaire du moteur, avec un manchon de ventilateur (1) insérable dans une ouverture de l'engrenage et avec un bouchon de ventilateur (3) inséré dans le manchon de ventilateur (1) et mobile par rapport à ce dernier, dans lequel le bouchon de ventilateur (3) ferme hermétiquement le passage à travers le manchon de ventilateur (1) dans une première position au moyen d'un élément d'étanchéité (2) et libère le passage à travers le manchon de ventilateur (1) dans une deuxième position, dans lequel il est prévu des moyens d'encliquetage (12, 13, 19) pour l'encliquetage du bouchon de ventilateur (3) dans le manchon de ventilateur (1), **caractérisé en ce que** les moyens d'encliquetage (12, 13, 19) comprennent des fentes (11) formées dans le manchon de ventilateur (1), qui sont configurées de telle manière qu'une broche de blocage (19) disposée sur le bouchon de ventilateur (3) puisse être logée à l'intérieur de deux parties élargies (12, 13) des fentes.

2. Dispositif selon la revendication 1, dans lequel le manchon de ventilateur (1) présente une partie avant de manchon (4) insérable hermétiquement dans le boîtier d'engrenage (8) et une partie arrière de manchon (5, 6, 7) disposée à l'extérieur du boîtier d'engrenage.

3. Dispositif selon la revendication 1 ou 2, dans lequel le bouchon de ventilateur (3) est mobile en direction axiale.

4. Dispositif selon la revendication 3, dans lequel le bouchon de ventilateur (3) présente une partie annulaire (16) avec une rainure annulaire (15), et l'élément d'étanchéité, en particulier un joint torique (2), est logé dans la rainure annulaire (15).

5. Dispositif selon l'une quelconque des revendications 1 à 4, dans lequel le manchon de ventilateur (1) présente un diamètre intérieur constant.

6. Dispositif selon l'une quelconque des revendications 1 à 5, dans lequel l'élément d'étanchéité (2) est disposé à l'extérieur du manchon de ventilateur (1) dans la deuxième position du bouchon de ventilateur (3).

7. Dispositif selon l'une quelconque des revendications 4 à 6, dans lequel le bouchon de ventilateur (3) présente une aire de section transversale réduite par rapport à l'aire de section transversale de la partie annulaire (16), pour la formation d'une fente de ventilation (22) entre le bouchon de ventilateur (3) et le manchon de ventilateur (1).

8. Dispositif selon l'une quelconque des revendications 1 à 7, dans lequel le manchon de ventilateur (1) présente une butée (5) destinée au positionnement du manchon de ventilateur (1) sur le boîtier d'engrenage (8).

9. Dispositif selon l'une quelconque des revendications 1 à 8, dans lequel le bouchon de ventilateur (3) présente, dans la région de son extrémité située à l'opposé du boîtier d'engrenage (8), un couvercle (14) destiné à couvrir l'extrémité du manchon de ventilateur (1) éloignée du boîtier d'engrenage dans la deuxième position du bouchon de ventilateur (3), la ventilation étant effectuée par une ouverture radiale (13) du manchon de ventilateur (1).

10. Dispositif selon l'une quelconque des revendications 1 à 9, dans lequel le bouchon de ventilateur (3) présente une face de butée (20) destinée à déplacer le bouchon de ventilateur (3) de la deuxième position à la première position au moyen d'un outil.

11. Dispositif selon l'une quelconque des revendications 1 à 10, dans lequel le dispositif destiné à la ventilation de l'engrenage de véhicule présente une partie annulaire (5), à laquelle un tuyau de ventilation peut être raccordé.
